# EUROPEAN PATENT APPLICATION

(11) **EP 4 691 971 A1**
(43) Date of publication of application: **11.02.2026**
(21) Application number: 24781133.4
(22) Date of filing: 22.03.2024
(51) Int. Cl.: C01B 3/34, C01B 3/48, C01B 3/52, C01B 3/56, B01D 53/047, C01D 7/00, F17C 1/00, F01K 23/10, F01D 15/10

(54) **HIGH-EFFICIENCY HYDROGEN TURBINE POWER GENERATION SYSTEM USING BLUE HYDROGEN**

(30) Priority: 28.03.2023 KR 20230040665
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2024/003617
(87) International publication number: WO 2024/205142

(57) **Abstract**

A high-efficiency hydrogen turbine power generation system using blue hydrogen, according to one embodiment of the present invention, comprises: a raw material gas supply equipment unit that removes foreign substances contained in raw material gas including natural gas or city gas, measures the flow rate, and supplies the raw material gas of which the pressure is increased to match the operating pressure required for hydrogen production; a hydrogen production equipment unit that continuously produces hydrogen gas by using a steam reforming reaction on the raw material gas supplied from the raw material gas supply equipment unit; a carbon dioxide capture equipment unit that removes carbon dioxide from the hydrogen gas produced by the hydrogen production equipment unit; a hydrogen storage equipment unit that receives and stores blue hydrogen from which carbon dioxide has been removed through the carbon dioxide capture equipment unit; and a hydrogen power generation equipment unit that produces electricity by receiving blue hydrogen from the hydrogen storage equipment unit.

## Description

### Technical Field

The present disclosure relates to a high-efficiency hydrogen turbine power generation system using blue hydrogen. More specifically, the present disclosure relates to a high-efficiency hydrogen turbine power generation system using blue hydrogen, the high-efficiency hydrogen turbine power generation system configured to produce hydrogen by reforming natural gas or city gas, and capture carbon dioxide to convert the produced hydrogen into clean blue hydrogen while mineralizing the captured carbon dioxide into sodium carbonate (Na₂CO₃), a useful resource, and combusting the finally obtained blue hydrogen to produce high-efficiency electricity.

### Background Art

Recently, with climate change emerging as a global issue, not only have responses of each country become active, but major countries have also introduced various policies to reduce greenhouse gases. Furthermore, although the Republic of Korea is obligated to reduce greenhouse gases under the Kyoto Protocol, which has now formally entered into force, these efforts are far from sufficient to reverse the rising trend of greenhouse gas emissions in practice.

In this situation, while the demand for research and development of alternative energy continues to grow due to global warming and depletion of fossil fuels, hydrogen energy is attracting attention as the only viable alternative for solving environmental and energy problems.

Hydrogen is an essential chemical used in energy, oil refining, fine chemical, and petrochemical processes. Typically, hydrogen is used in various refinery processes. Recently, as the fossil fuel-based economy has begun to shift toward a hydrogen economy within society, attention has been drawn to process development of reformers for small fuel cells, hydrogen stations for fuel cell vehicles, and chemical plants for large-scale hydrogen production.

A representative method of producing the above hydrogen is water electrolysis technology, which produces hydrogen from pure water using electric energy.

Existing water electrolysis technology, in practice, includes an external power source, an anode, and a cathode, and is configured such that, when applying electricity from the external power source, oxygen (O₂) is generated through oxidation at the anode, and hydrogen (H₂) is generated through reduction at the cathode. In other words, existing water electrolysis technology can be viewed as a decomposition process of water into hydrogen and oxygen through electrolysis.

In this case, during the reduction process, OH radicals are generated as a reaction product at the cathode of the existing electrolysis technology. These OH radicals are prone to recombination with oxygen (O₂) generated through oxidation at the anode and with hydrogen (H₂) generated through reduction at the cathode, thereby producing water (H₂O). As a result, there is a problem in that the efficiency of hydrogen (H₂) generation is reduced.

In the meantime, a steam reforming method has been developed and disseminated in terms of the economic feasibility of hydrogen production, in which water gas is produced by adding high-temperature and high-pressure steam to natural gas containing hydrocarbons such as methane for reforming, and the produced water gas undergoes a pressure swing adsorption (PSA) process to separate and produce hydrogen.

However, because carbon dioxide produced together with hydrogen during the PSA process is emitted into the atmosphere (the hydrogen generated in this case is commonly referred to as "grey hydrogen"), there is a limitation in reducing greenhouse gases.

Therefore, recently, production and utilization technologies of "blue hydrogen", in which carbon dioxide produced during hydrogen production is captured and removed so as not to be emitted into the atmosphere, have emerged as a practical alternative for reducing greenhouse gases.

Accordingly, due to the recent acceleration of global warming caused by carbon dioxide, there has been an urgent need to develop power generation systems for efficient electricity production using such blue hydrogen.

### Disclosure

### Technical Problem

Hence, the present disclosure, which has been devised to address the issues as described above, aims to provide a high-efficiency hydrogen turbine power generation system using blue hydrogen, the high-efficiency hydrogen turbine power generation system configured to produce hydrogen by reforming natural gas or city gas, and capture carbon dioxide to convert the produced hydrogen into clean blue hydrogen while mineralizing the captured carbon dioxide into sodium carbonate (Na₂CO₃), a useful resource, and combusting the finally obtained blue hydrogen to produce high-efficiency electricity.

### Technical Solution

In order to achieve the objective as described above, the present disclosure, according to one embodiment, is configured as including: a raw material gas supply equipment unit configured to remove foreign substances from a raw material gas including natural gas or city gas, measure a flow rate, and supply the raw material gas having an increased pressure matching an operating pressure required for hydrogen production; a hydrogen production equipment unit configured to continuously produce hydrogen gas through a steam reforming reaction of the raw material gas supplied from the raw material gas supply equipment unit; a carbon dioxide capture equipment unit configured to remove carbon dioxide from the hydrogen gas produced by the hydrogen production equipment unit; a hydrogen storage equipment unit configured to receive and store blue hydrogen from which carbon dioxide has been removed through the carbon dioxide capture equipment unit; and a hydrogen power generation equipment unit configured to produce electricity by receiving the blue hydrogen from the hydrogen storage equipment unit.

In addition, according to one embodiment, the raw material gas supply equipment unit includes: a first compressor configured to increase the pressure of the raw material gas to the operating pressure required for hydrogen production; a compressor knock-out drum and a strainer configured to separate and remove liquid particles from the raw material gas to protect the first compressor; a flow meter configured to check a supply amount of the raw material gas; and a gas storage drum configured to store the raw material gas compressed by the first compressor.

In addition, according to one embodiment, the carbon dioxide capture equipment unit includes: a mixer configured to supply a basic alkaline mixed solution of specific components; an absorption tower configured to react the basic alkaline mixed solution supplied from the mixer with an off-gas or a tail gas generated from the hydrogen production equipment unit to capture carbon dioxide from the gas; and a discharge unit provided at one side of the absorption tower and configured to discharge a reaction product containing carbon dioxide.

In addition, according to one embodiment, the hydrogen production equipment unit includes: a hydrogen reforming unit configured to remove a sulfur component from the natural gas and produce hydrogen through the steam reforming reaction of the raw material gas from which the sulfur component has been removed; a heat exchanger configured to cool a synthesis gas produced during the steam reforming reaction while heating the hydrogen reforming unit to a reaction temperature (in a range of 820°C to 850°C) for the steam reforming reaction; a separator configured to remove a liquid produced as the synthesis gas is cooled in the heat exchanger; and a PSA unit configured to separate carbon dioxide and hydrogen produced by the hydrogen reforming unit.

In addition, according to one embodiment, the carbon dioxide capture equipment unit removes an off-gas generated during heat supply and carbon dioxide generated during conversion of the raw material gas into hydrogen, while the raw material gas supplied to the hydrogen reforming unit produces the synthesis gas containing hydrogen through the steam reforming reaction, and removes carbon dioxide again from a tail gas produced during PSA for hydrogen purification after the synthesis gas is supplied to the PSA unit, thereby producing the blue hydrogen.

In addition, according to one embodiment, the hydrogen reforming unit includes: a hydrogen reformer (H₂ reformer) configured to produce hydrogen by reacting methane with steam through the steam reforming reaction; and a carbon monoxide shifter (CO shifter) configured to produce carbon dioxide and hydrogen by reacting the carbon monoxide produced from the hydrogen reformer with steam again through a steam reforming reaction.

In addition, according to one embodiment, the hydrogen storage equipment unit includes: a second compressor configured to compress the blue hydrogen supplied from the carbon dioxide capture equipment unit; and a hydrogen storage drum configured to store the blue hydrogen supplied from the second compressor.

In addition, according to one embodiment, the hydrogen power generation equipment unit includes: a hydrogen turbine generator configured to primarily produce electricity while being driven in rotation by a pressure of a combustion gas generated through combustion of the supplied blue hydrogen; and a steam turbine generator configured to secondarily produce electricity while being driven in rotation by a pressure of steam produced by and supplied from the hydrogen turbine generator.

In addition, according to one embodiment, the discharge unit of the carbon dioxide capture equipment unit further includes a carbon resource separation equipment unit configured to collect the reaction product containing carbon dioxide captured in the absorption tower and separate the reaction product into a carbon dioxide product and a waste solution.

In addition, according to one embodiment, the carbon resource separation equipment unit includes a separator configured to separate the waste solution from the carbon dioxide product using centrifugation.

In addition, according to one embodiment, the carbon resource separation equipment unit further includes a carbonate resource packaging equipment unit configured to dry and package an aqueous sodium carbonate (Na₂CO₃) solution separated by the separator.

### Advantageous Effects

As described above, a high-efficiency hydrogen turbine power generation system using blue hydrogen, according to the present disclosure, produces hydrogen by reforming natural gas or city gas, and captures carbon dioxide to convert the produced hydrogen into clean blue hydrogen while mineralizing the captured carbon dioxide into sodium carbonate (Na₂CO₃), a useful resource. Thus, there is an effect of significantly reducing carbon dioxide emissions in the atmosphere.

In addition, the finally obtained blue hydrogen is combusted to produce high-efficiency electricity, thereby preventing emission of harmful by-products compared to electricity production in existing power plants. Thus, there is an effect of enabling eco-friendly clean energy production.

Furthermore, carbon dioxide is captured immediately upon generation during the reforming of a raw material gas, and the captured carbon dioxide is converted directly into a carbon resource, thereby producing high-purity blue hydrogen. At the same time, there is an effect of preparing sodium carbonate, another useful material, using the removed carbon dioxide.

### Description of Drawings

Figure 1 is a schematic diagram illustrating configurations of a high-efficiency hydrogen turbine power generation system using blue hydrogen of the present disclosure, according to one embodiment.
Figure 2 is a conceptual diagram illustrating a carbon dioxide capture equipment unit according to one embodiment of the present disclosure.
Figure 3 is a conceptual diagram illustrating an annular gas turbine combustor of a hydrogen turbine generator according to one embodiment of the present disclosure.

### Best Mode

Terms used herein are merely for describing specific embodiments and are not intended to limit the present disclosure. The singular expressions include the plural expressions, unless otherwise explicitly stated in the context. It will be further understood that the terms "comprises", "includes", "has", "provides", and the like used herein specify the presence of features, integers, steps, operations, elements, components, or combinations thereof stated herein, but do not preclude the presence or addition of one or more other features, integers, steps, operations, elements, components, or combinations thereof.

Unless otherwise defined, all terms used herein, including technical or scientific terms, have the same meaning as commonly understood by those skilled in the art to which the present disclosure pertains.

Terms, such as those defined in commonly used dictionaries, should be interpreted as having a meaning that is consistent with their meaning in the context of the related art and should not be interpreted in an idealized or overly formal sense unless expressly so defined herein.

Hereinafter, the configurations and operational relationships of a high-efficiency hydrogen turbine power generation system using blue hydrogen, according to one embodiment of the present disclosure, are to be described in detail with reference to the accompanying drawings as follows.

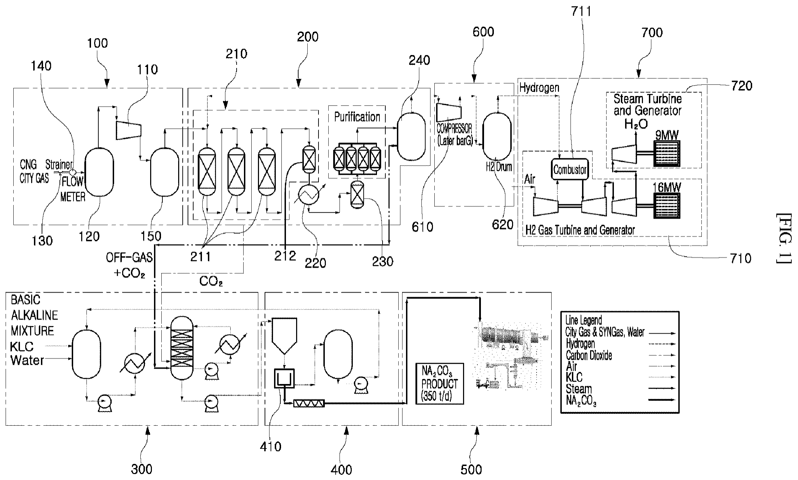

Figure 1 is a schematic diagram illustrating the configurations of the high-efficiency hydrogen turbine power generation system using blue hydrogen of the present disclosure according to one embodiment.

From a detailed look at the configurations according to one embodiment of the present disclosure with reference to Figure 1, the present disclosure is configured as primarily including: a raw material gas supply equipment unit 100, a hydrogen production equipment unit 200, a carbon dioxide capture equipment unit 300, a carbon resource separation equipment unit 400, a carbonate resource packaging equipment unit 500, a hydrogen storage equipment unit 600, and a hydrogen power generation equipment unit 700.

First, the raw material gas supply equipment unit 100 removes foreign substances from a raw material gas including natural gas or city gas, measures the flow rate, and stably supplies the raw material gas having an increased pressure matching the operating pressure required for hydrogen production.

Referring to Figure 1, according to one embodiment, the raw material gas supply equipment unit 100 may include: a first compressor 110 configured to increase the pressure of the raw material gas to the operating pressure required for hydrogen production; a compressor knock-out drum 120 and a strainer 130 configured to separate and remove liquid particles from the raw material gas to protect the first compressor 110; a flow meter 140 configured to check a supply amount of the raw material gas; and a gas storage drum 150 configured to store the raw material gas compressed by the first compressor 110.

The compressor knock-out drum 120 is a device used when separating respective phases of a flowable fluid (the raw material gas) having two or more phases. Typically, such a device used to separate complex phases is collectively referred to as a vapor-liquid separator. In addition, the strainer 130, which is a type of screen, serves to filter the foreign substances from the raw material gas, thereby protecting the first compressor 110 from the inflow of the foreign substances.

Furthermore, the hydrogen production equipment unit 200 continuously produces hydrogen gas through a steam reforming reaction of the raw material gas supplied from the raw material gas supply equipment unit 100. The produced hydrogen gas may be transported to and stored in separate hydrogen storage equipment (not shown). For example, the hydrogen storage equipment (not shown) may be composed of a storage drum (not shown) and a compressor (not shown) configured to stably supply 99.999 vol% of hydrogen produced by the hydrogen production equipment unit 200 of the present disclosure to the hydrogen power generation equipment unit 700 to be described later.

According to one embodiment, the hydrogen production equipment unit 200 may include: a hydrogen reforming unit 210 configured to remove a sulfur component from the natural gas (for example, performing a desulfurization process under a temperature condition of 350°C) and produce hydrogen through the steam reforming reaction of the natural gas from which the sulfur component has been removed; a heat exchanger 220 configured to cool a synthesis gas synthesized during the steam reforming reaction while heating the hydrogen reforming unit 210 to a reaction temperature, for example, in the range of 820°C to 850°C, for the steam reforming reaction; a separator 230 configured to remove a liquid produced as the synthesis gas is cooled in the heat exchanger 220; and a PSA unit 240 configured to separate carbon dioxide and hydrogen produced by the hydrogen reforming unit 210.

The hydrogen reforming unit 210 includes: a hydrogen reformer (H₂ reformer) 211 configured to produce hydrogen by reacting methane with steam through the steam reforming reaction of <Reaction Formula 1> below; and a carbon monoxide shifter (CO shifter) 212 configured to produce carbon dioxide and hydrogen by reacting the carbon monoxide produced from the hydrogen reformer 211 with steam again through a steam reforming reaction of

### <Reaction Formula 2> below.

CH₄ + H₂O → CO + 3H₂ <Reaction Formula 1>

CO + H₂O → CO₂ + H₂ <Reaction Formula 2>

According to one embodiment, the hydrogen reformer 211 may be a steam reforming reactor having burners formed around the periphery and filled with a reforming catalyst inside. The steam reforming reaction of <Reaction Formula 1> may be performed under a temperature condition in the range of 820°C to 850°C.

In addition, the carbon monoxide shifter 212 serves to reduce the content of carbon monoxide because carbon monoxide produced by the hydrogen reformer 211 acts as a catalyst poison. The steam reforming reaction of <Reaction Formula 2> may be performed under a temperature condition of approximately 330°C.

In addition, the heat exchanger 220 cools the reformed synthesis gas and may be a device with a built-in heater configured to heat the hydrogen reformer 211.

In addition, the separator 230 may be a condenser configured to condense the liquid.

In addition, the carbon dioxide capture equipment unit 300 removes carbon dioxide from the hydrogen gas produced by the hydrogen production equipment unit 200.

In other words, the carbon dioxide capture equipment unit 300 may be connected to the hydrogen production equipment unit 200, thus receiving carbon dioxide produced from the hydrogen production equipment unit 200, reacting the received carbon dioxide with a basic alkaline mixed solution, and capturing carbon dioxide, collect a reaction product containing the captured carbon dioxide, and separate the reaction product into a carbon dioxide product and a waste solution, thereby capturing carbon dioxide and converting the captured carbon dioxide into a carbon resource.

According to one embodiment, while the raw material gas (methane gas) supplied to the hydrogen reforming unit 210 produces the synthesis gas containing hydrogen through the steam reforming reaction, the carbon dioxide capture equipment unit 300 removes an off-gas generated during heat supply and carbon dioxide generated during conversion of the raw material gas into hydrogen (primary carbon dioxide removal process).

Subsequently, carbon dioxide is removed again from a tail gas generated during PSA for hydrogen purification after the synthesis gas produced through the conversion of the raw material gas into hydrogen is supplied to the PSA unit 240, thereby finally producing high-quality blue hydrogen (secondary carbon dioxide removal process).

As a result, the system, according to the present disclosure, may capture carbon dioxide generated during hydrogen production with a performance of 97% or more, and continuously convert by-products resulting from carbon dioxide capture into sodium carbonate, sodium bicarbonate, or calcium carbonate, thereby achieving both production of blue hydrogen and resource utilization of carbonates.

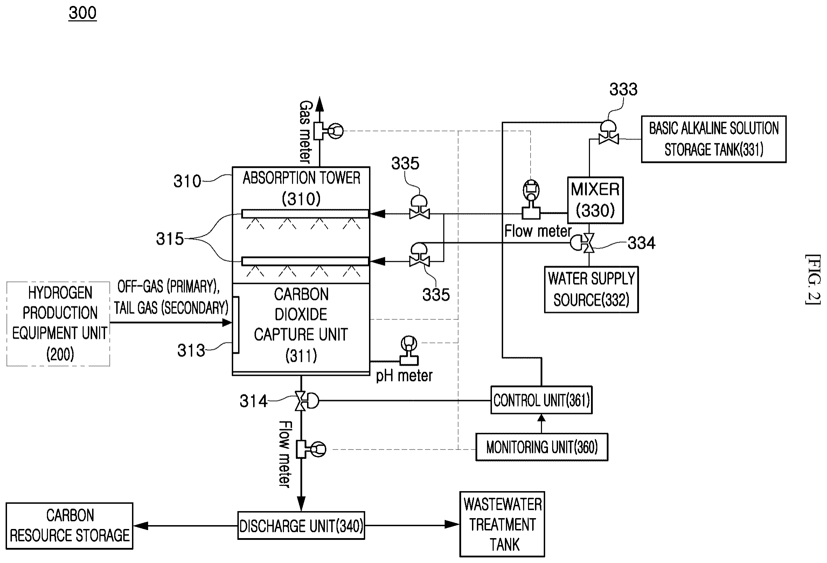

Figure 2 is a conceptual diagram illustrating a carbon dioxide capture equipment unit according to one embodiment of the present disclosure.

Referring to Figure 2, the carbon dioxide capture equipment unit 300 is a system for capturing carbon dioxide supplied from the hydrogen production equipment unit 200 using a basic alkaline solution. According to one embodiment, the carbon dioxide capture equipment unit 300 may be implemented as a scrubber type.

To this end, the carbon dioxide capture equipment unit 300 may be configured as primarily including the following components: an absorption tower 310, a carbon dioxide capture unit 311, a gas introduction unit 313 configured to introduce the tail gas or reaction gas produced through the aforementioned steam reforming reaction into the absorption tower 310, nozzles 315, a mixer 330, and a discharge unit 340.

In this case, multiple nozzles 315 are installed in the absorption tower 310 at the top, so the basic alkaline mixed solution supplied from the mixer 330 is sprayed into the absorption tower 310 through the nozzles 315 and then collected at the carbon dioxide capture unit 311 therebelow.

The nozzles 315 may include multiple nozzles installed in the absorption tower 310 at the top or on the side. These nozzles 315 may be formed in one or more stages, or may be formed, as shown in Figure 2, in multiple stages arranged vertically in a double structure. Accordingly, the nozzles 315 are connected to the mixer 330 and thus may evenly spray the basic alkaline mixed solution into the absorption tower 310 from the mixer 330, thereby capturing carbon dioxide.

The absorption tower 310 may refer to a facility, building, or equipment used to capture carbon dioxide. In addition, the carbon dioxide capture unit 311 located at the bottom of the absorption tower 310 is one part of the absorption tower 310 and refers to where the off-gas (primary carbon dioxide removal target) or the tail gas (secondary carbon dioxide removal target) is introduced to capture carbon dioxide.

In other words, while the basic alkaline mixed solution is sprayed from the nozzle 315, the off-gas (primary carbon dioxide removal target) or tail gas (secondary carbon dioxide removal target), supplied from the hydrogen production equipment unit 200, is supplied to the inside of the absorption tower 310 through the introduction unit 313 at the bottom of the absorption tower 310. Subsequently, in the carbon dioxide capture unit 311 or thereabove, the basic alkaline mixed solution and carbon dioxide come into contact and react with each other, thereby finally capturing carbon dioxide.

The absorption tower 310 may be configured in series, in parallel, or in a combined series-parallel arrangement. For example, the absorption tower 310 may be arranged in series when the flow velocity of exhaust gas is high. When unreacted carbon dioxide is discharged from the absorption tower 310 due to a high flow velocity, the absorption tower 310 may be installed in series to capture the unreacted carbon dioxide.

In the meantime, the absorption tower 310 may, for example, be arranged in parallel when the flow rate of hydrogen gas is high. When the flow rate of hydrogen gas exceeds the amount that the absorption tower 310 can capture, the amount of capturable carbon dioxide may be increased by arranging the absorption tower 310 in parallel.

The mixer 330 mixes the basic alkaline solution supplied from a basic alkaline solution storage tank 331, with water supplied from a water supply source 332, thereby supplying the resulting mixture to the nozzles 315 of the absorption tower 310.

The basic alkaline solution and water may be mixed in a ratio in the range of 1:1 to 1:5. For example, the basic alkaline solution and water may be mixed in a ratio in the range of 1:1 to 1:4, 1:1 to 1:3, 1:1 to 1:2, 1:2 to 1:5, 1:2 to 1:3, or 1:3 to 1:5.

The higher the mixing ratio of the basic alkaline solution in the basic alkaline solution and water, the higher the capture rate of carbon dioxide. However, the mixing ratio of water may be adjusted in consideration of cost aspects.

The basic alkaline mixed solution is characterized by including: one or more oxides selected from the group consisting of SiO₂, Al₂O₃, Fe₂O₃, TiO₂, MgO, MnO, CaO, Na₂O, K₂O, and P₂O₃; one or more metals selected from the group consisting of Li, Cr, Co, Ni, Cu, Zn, Ga, Sr, Cd, and Pb; a crystallized synthetic zeolite prepared using an alumina-based raw material, a silica-based raw material, and sodium hydroxide; and one or more liquid compositions selected from the group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 332 may include any water that can be readily obtained at locations where the system is to be installed and may, for example, be seawater.

The average pH of the basic alkaline mixed solution may be 12 or higher. For example, the pH may be in the range of 12 to 13.5, 13, 12, 12.1, 12.2, or 12.3. The pH of the basic alkaline mixed solution may be measured using a pH meter in the absorption tower 310. When the pH of the basic alkaline mixed solution in the absorption tower 310 is lower than 10.5, carbon dioxide can no longer be captured. For this reason, to adjust the pH of the basic alkaline mixed solution, the amounts of the basic alkaline solution and water may be adjusted from 0% to 100% at each of the valves 333, 334 and supplied to the mixer 330.

The supply amount of the basic alkaline mixed solution in the absorption tower 310 is controlled through a valve 335 in the mixer 330, such that the basic alkaline mixed solution is fed. In addition, the feeding may be stopped by blocking the valve 335.

Because the amount of the basic alkaline mixed solution supplied to the absorption tower 310 and the amount of the solution discharged from the discharge unit 340 are the same, the carbon dioxide capture system can be continuously maintained. For this reason, the net flow may be set to 0, for example, by adjusting the valve 335 so that the amount of the basic alkaline mixed solution, which is the same as that discharged through the discharge unit 340, is supplied to the absorption tower 310.

In the carbon dioxide capture unit 311 of the absorption tower 310, the basic alkaline mixed solution reacts with carbon dioxide, thereby collecting the reaction product containing the captured carbon dioxide. The carbon dioxide product and the waste solution are then discharged from the reaction product through a valve 314.

In the meantime, referring to Figure 1, the carbon dioxide capture equipment unit 300 may further include the carbon resource separation equipment unit 400 configured to separate a carbon resource from the carbon dioxide product discharged through the valve 314.

The carbon resource separation equipment unit 400 includes a separator 410 configured to separate the waste solution from the carbon dioxide product. For example, the separator 410 may perform separation using centrifugation.

The separated carbon dioxide product containing sodium carbonate (Na₂CO₃) or sodium bicarbonate (NaHCO₃), a useful carbon resource, may, for example, be transported to and stored in a carbon resource storage (without reference numeral).

In addition, referring to Figure 1, the carbon resource separation equipment unit 400 may further include a carbonate resource packaging equipment unit 500 configured to dry and package an aqueous sodium carbonate (Na₂CO₃) solution separated by the separator 410.

According to one embodiment, the carbonate resource packaging equipment unit 500 may include a heater (without reference numeral) arranged outside a rotating cylindrical conveyor drum (without reference numeral) to dry the aqueous sodium carbonate (Na₂CO₃) solution. Accordingly, the sodium carbonate (Na₂CO₃), having passed through the carbonate resource packaging equipment unit 500, is subjected to drying and purification processes and packaged in predetermined units for commercialization.

In addition, the hydrogen storage equipment unit 600 may include: a second compressor 610 configured to compress the blue hydrogen supplied from the carbon dioxide capture equipment unit 300; and a hydrogen storage drum 620 configured to store the blue hydrogen supplied from the second compressor 610.

According to one embodiment, the second compressor 610 may have a capacity of 68 kg/hr at 110 MPa to compress the blue hydrogen supplied from the carbon dioxide capture equipment unit 300.

According to one embodiment, the hydrogen storage drum 620 may be designed to have a capacity for stably supplying blue hydrogen to the hydrogen power generation equipment unit 700 to be described later without a change in flow rate. For example, assuming that 18,000 m³ of blue hydrogen is produced per hour, a storage capacity of approximately 6,000 m³ is required for stable storage and supply (in a rough calculation, approximately 20 hydrogen storage tanks each having an inner diameter of 6 m and a length of 10 m are required).

In addition, the hydrogen power generation equipment unit 700, according to the present disclosure, produces electricity by receiving the blue hydrogen from which carbon dioxide has been removed through the carbon dioxide capture equipment unit 300.

According to one embodiment, the hydrogen power generation equipment unit 700 may include: a hydrogen turbine generator 710 configured to primarily produce electricity while being driven in rotation by a pressure of a combustion gas generated through direct combustion of the supplied blue hydrogen; and a steam turbine generator 720 configured to secondarily produce electricity while being driven in rotation by a pressure of steam produced by and supplied from the hydrogen turbine generator 710.

Specifically, the hydrogen turbine generator 710 has a combustion chamber (not shown) configured to directly combust blue hydrogen, converting the expansion energy of the blue hydrogen generated in the combustion chamber into kinetic energy using the turbine rotor blades. The kinetic energy is converted into rotational energy, which is connected to a generator through a shaft to generate electricity. This turbine shaft is also connected to an air compressor, which increases the pressure of the combustion air to supply a sufficient amount of oxygen to the combustion chamber, thereby enabling complete combustion. In this case, steam generated through the direct combustion of blue hydrogen in the hydrogen turbine generator 710 is resupplied to the steam turbine generator 720 so as to drive the turbine shaft in rotation, thereby achieving additional power generation.

Therefore, the hydrogen power generation equipment unit 700 primarily produces electricity in the hydrogen turbine generator 710 by the direct combustion of blue hydrogen, and then secondarily produces electricity once again in the steam turbine generator 720 by recovering the energy of steam supplied from the hydrogen turbine generator 710, thus enabling high-efficiency power generation.

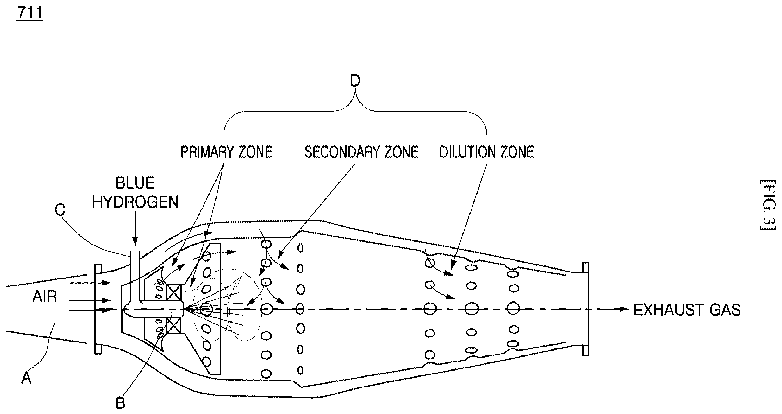

Figure 3 is a conceptual diagram illustrating an annular gas turbine combustor of a hydrogen turbine generator according to one embodiment of the present disclosure.

Referring to Figure 3, the hydrogen turbine generator 710, according to the present disclosure, includes an annular gas turbine combustor 711.

The velocity of air flowing into the annular gas turbine combustor 711 is significantly higher than the flame velocity of the fuel. To slow this down, a diffuser A may be arranged before the hydrogen flows into a combustion chamber D.

In this case, the flow velocity of air passing through the diffuser A undergoes primary deceleration, and a flow recirculation zone is created through a swirler B at the dome inlet, resulting in strong vortices due to the recirculating flow. These vortices not only significantly reduce the axial velocity but also promote atomization of the fuel sprayed from an injector C and mixing with the air, thereby contributing to improved fuel efficiency, reduced emissions of harmful exhaust gases, and enhanced ignition performance. The combustion region in this case corresponds to a primary zone.

In addition, while a primary dilution air flows into a region where the primary zone ends to reduce the combustion temperature, this region into which the dilution air flows becomes a secondary zone or intermediate zone, and is in charge of not only reducing the gas temperature in the primary zone but also controlling exhaust gases.

Lastly, while a secondary dilution air flows from the end of the combustor 711, this region becomes a dilution zone, and contributes not only to uniformly maintaining the exhaust gas temperature at the outlet of the combustor 711 but also to reducing emissions of exhaust gases.

In the meantime, despite having a high calorific value per unit mass, hydrogen exhibits a significantly low density, resulting in a volumetric calorific value less than half that of methane, and has a relatively high adiabatic flame temperature and significantly high reactivity. Accordingly, the high reactivity of hydrogen is associated with extremely rapid flame propagation speed and short ignition delay time.

When hydrogen is used directly as a fuel for existing natural gas turbine engines, the extremely rapid flame propagation speed and high heat release rate may dramatically increase the possibility of flashback and autoignition.

In addition, during hydrogen combustion, the combustion conversion of CH₂O, C₂H₂, and CO is promoted, thereby reducing emissions. However, a problem arises that NOx emissions increase with the hydrogen volume fraction.

To address such issues, the annular gas turbine combustor 711 of the present disclosure is designed to have a structure that reduces NOx emissions, and thus is characterized by controlling the flame speed of hydrogen and reducing NOx emissions.

In addition, the annular gas turbine combustor 711, according to the present disclosure, uses the blue hydrogen supplied from the hydrogen storage equipment unit 600 as a fuel gas, and may also use nitrogen, an inert gas, to reduce autoignition caused by hydrogen combustion and minimize the possibility of forming an air-hydrogen mixture. Accordingly, this nitrogen may serve as a safety barrier between all possible locations outside the combustion chamber D where oxygen and hydrogen may come into contact.

In addition, according to one embodiment, an inert gas purge system may be added to the present disclosure, thereby temporarily cleaning a fuel gas piping in which air may flow during certain operational steps, and continuously buffering a predetermined amount of hydrogen so as to maintain the hydrogen separated from the hot air discharged from an axial compressor.

In this case, hydrogen supplied as the fuel gas may significantly deteriorate the mechanical properties of metals. For this reason, the annular gas turbine combustor 711 of the present disclosure may be manufactured using 316/316L grade stainless steel.

In addition, hydrogen is more prone to leaks than other gases, so careful attention is required for flange connections and fittings. Accordingly, in the present disclosure, synthetic resins capable of maintaining integrity at high temperatures, such as polychlorotrifluoroethylene

(PCTFE) resin, polytetrafluoroethylene (PTFE, Teflon) resin, and polyamide resin, or compounds, such as Buna-N (nitrile rubber), chloroprene rubber (neoprene), and fluorocarbon rubber (known as Viton), are usable as the flange or fitting materials.

Furthermore, the present disclosure is not limited merely to the embodiment described above, and the same effect can be achieved even when the detailed configuration, number, and arrangement of the system are changed. Accordingly, those skilled in the art to which the present disclosure pertains will appreciate that various additions, deletions, and modifications of various configurations are possible within the scope of the technical spirit of the present disclosure.

### Industrial Applicability

The present disclosure can be widely applied to the field of a high-efficiency hydrogen turbine power generation system using blue hydrogen.

## Claims

1. A high-efficiency hydrogen turbine power generation system using blue hydrogen, the power generation system comprising:
a raw material gas supply equipment unit configured to remove foreign substances from a raw material gas comprising natural gas or city gas, measure a flow rate, and supply the raw material gas having an increased pressure matching an operating pressure required for hydrogen production;
a hydrogen production equipment unit configured to continuously produce blue hydrogen through a steam reforming reaction of the raw material gas supplied from the raw material gas supply equipment unit;
a carbon dioxide capture equipment unit configured to remove carbon dioxide generated during production of the blue hydrogen by the hydrogen production equipment unit;
a hydrogen storage equipment unit configured to receive and store the blue hydrogen from which carbon dioxide has been removed through the carbon dioxide capture equipment unit; and
a hydrogen power generation equipment unit configured to produce electricity by receiving the blue hydrogen from the hydrogen storage equipment unit.

2. The power generation system of claim 1, wherein the raw material gas supply equipment unit comprises:
a first compressor configured to increase the pressure of the raw material gas to the operating pressure required for hydrogen production;
a compressor knock-out drum and a strainer configured to separate and remove liquid particles from the raw material gas to protect the first compressor;
a flow meter configured to check a supply amount of the raw material gas; and
a gas storage drum configured to store the raw material gas compressed by the first compressor.

3. The power generation system of claim 1, wherein the carbon dioxide capture equipment unit comprises:
a mixer configured to supply a basic alkaline mixed solution of specific components;
an absorption tower configured to react the basic alkaline mixed solution supplied from the mixer with an off-gas or a tail gas generated from the hydrogen production equipment unit to capture carbon dioxide from the gas; and
a discharge unit provided at one side of the absorption tower and configured to discharge a reaction product containing carbon dioxide.

4. The power generation system of claim 1, wherein the hydrogen production equipment unit comprises:
a hydrogen reforming unit configured to remove a sulfur component from the natural gas and produce a synthesis gas through the steam reforming reaction of the raw material gas from which the sulfur component has been removed;
a heat exchanger configured to cool the synthesis gas produced during the steam reforming reaction while heating the hydrogen reforming unit to a reaction temperature (in a range of 820°C to 850°C) for the steam reforming reaction;
a separator configured to remove a liquid produced as the synthesis gas is cooled in the heat exchanger; and
a pressure swing adsorption (PSA) unit configured to separate carbon dioxide and hydrogen produced by the hydrogen reforming unit.

5. The power generation system of claim 4, wherein the carbon dioxide capture equipment unit removes an off-gas generated during heat supply and carbon dioxide generated during conversion of the raw material gas into hydrogen, while the raw material gas supplied to the hydrogen reforming unit produces the synthesis gas containing hydrogen through the steam reforming reaction, and removes carbon dioxide again from a tail gas produced during PSA for hydrogen purification after the synthesis gas is supplied to the PSA unit, thereby producing the blue hydrogen.

6. The power generation system of claim 4, wherein the hydrogen reforming unit comprises:
a hydrogen reformer (H₂ reformer) configured to produce hydrogen by reacting methane with steam through the steam reforming reaction; and
a carbon monoxide shifter (CO shifter) configured to produce carbon dioxide and hydrogen by reacting the carbon monoxide produced from the hydrogen reformer with steam again through a steam reforming reaction.

7. The power generation system of claim 1, wherein the hydrogen storage equipment unit comprises:
a second compressor configured to compress the blue hydrogen supplied from the carbon dioxide capture equipment unit; and
a hydrogen storage drum configured to store the blue hydrogen supplied from the second compressor.

8. The power generation system of claim 1, wherein the hydrogen power generation equipment unit comprises:
a hydrogen turbine generator configured to primarily produce electricity while being driven in rotation by a pressure of a combustion gas generated through combustion of the supplied blue hydrogen; and
a steam turbine generator configured to secondarily produce electricity while being driven in rotation by a pressure of steam produced by and supplied from the hydrogen turbine generator.

9. The power generation system of claim 3, wherein the discharge unit of the carbon dioxide capture equipment unit further comprises:
a carbon resource separation equipment unit configured to collect the reaction product containing carbon dioxide captured in the absorption tower and separate the reaction product into a carbon dioxide product and a waste solution.

10. The power generation system of claim 9, wherein the carbon resource separation equipment unit comprises:
a separator configured to separate the waste solution from the carbon dioxide product using centrifugation.

11. The power generation system of claim 10, wherein the carbon resource separation equipment unit further comprises:
a carbonate resource packaging equipment unit configured to dry and package an aqueous sodium carbonate (Na₂CO₃) solution separated by the separator.
